# EUROPÄISCHE PATENTSCHRIFT

(11) **EP 3 872 377 B1**
(45) Veröffentlichungstag und Bekanntmachung des Hinweises auf die Patenterteilung: **18.12.2024**
(21) Anmeldenummer: 20210850.2
(22) Anmeldetag: 01.12.2020
(51) Int. Cl.: F16K 11/065, F16K 37/00, F16K 27/04, F16K 31/06, F01P 7/14

(54) **VENTIL FÜR EIN KRAFTFAHRZEUG**
VALVE FOR A MOTOR VEHICLE
SOUPAPE POUR UN VÉHICULE AUTOMOBILE

(30) Priorität: 26.02.2020 AT 5003520 U
(43) Veröffentlichungstag der Anmeldung: 01.09.2021
(73) Patentinhaber: MSG Mechatronic Systems GmbH, 8551 Wies (AT)
(72) Erfinder: Theußl, Daniel, 8530 Deutschlandsberg (AT); Schöner, Gerhard, 8530 Deutschlandsberg (AT); Lampl, Ewald, 8551 Wies (AT)
(74) Vertreter: Wirnsberger & Lerchbaum Patentanwälte OG

(56) Entgegenhaltungen:
- EP-A1- 3 453 930
- WO-A1-2019/159698
- DE-A1- 102012 109 094
- US-A1- 2002 029 809
- US-A1- 2017 057 805

## Beschreibung

Die Erfindung betrifft ein Ventil für ein Kraftfahrzeug, insbesondere für einen Kühlmittelkreislauf in einem Kraftfahrzeug, mit einem Gehäuse, welches einen Hohlraum aufweist, in welchen ein Einlass und ein Auslass münden, wobei der Einlass mit dem Auslass in einem geöffneten Zustand des Ventils durch einen durch den Hohlraum verlaufenden Strömungspfad verbunden ist, einer zwischen dem Einlass und dem Auslass entlang des Strömungspfades im Hohlraum angeordneten Ventilöffnung und einem Verschluss, welcher relativ zum Gehäuse von einer ersten Position entlang eines Verstellweges in eine zweite Position bewegbar ist, wobei der Verschluss die Ventilöffnung in der ersten Position zu einem geringeren Grad als in der zweiten Position verschließt.

Aus dem Stand der Technik sind verschiedene Ventile für Kraftfahrzeuge bekannt geworden. Beispielsweise ist aus dem Dokument EP 3 453 930 A1 ein entsprechendes Ventil bekannt geworden, welches auch für den Einsatz in einem Kühlmittelkreislauf eines Kraftfahrzeuges geeignet ist. Bei einem solchen Ventil wird ein Anker mittels eines Elektromagneten unter Einwirkung einer Federkraft bewegt. Um eine tatsächliche Ist-Position des Ankers bestimmen zu können, wird nach diesem Dokument vorgeschlagen, am Verschluss einen Permanentmagnet und im Hohlraum einen Magnetfeldsensor auszubilden, der eine Position des zumindest einen Verschlusses erfasst.

Es hat sich allerdings gezeigt, dass ein entsprechender Aufbau nur mit hohem Aufwand herstellbar ist und zudem nur eine geringe Messgenauigkeit erreicht wird, sodass eine Position des Verschlusses bzw. eine Stellung des Ventils nur mit geringer Genauigkeit erfassbar ist.

Hier setzt die Erfindung an. Aufgabe der Erfindung ist es, ein Ventil der eingangs genannten Art anzugeben, bei welchem ein Zustand des Ventils auf einfache und gleichzeitig genaue Weise während eines Betriebes bestimmbar ist.

Diese Aufgabe wird erfindungsgemäß durch ein Ventil der eingangs genannten Art gelöst, bei welchem mit dem Verschluss ein Permanentmagnet verbunden ist, sodass eine Bewegung des Verschlusses entlang des Verstellweges eine Bewegung des Permanentmagneten bewirkt, wobei außerhalb des Hohlraumes ein Sensor angeordnet ist, mit welchem eine Position des Permanentmagneten erfassbar ist.

Im Rahmen der Erfindung wurde erkannt, dass ein hoher Aufwand bei der Herstellung genauso wie eine geringe Genauigkeit der mit dem Sensor erfassten Position vermieden werden können, wenn der Sensor nicht wie im Stand der Technik vorgeschlagen im Hohlraum angeordnet, sondern außerhalb des Hohlraumes positioniert wird. So ist dann auf einfache Weise ausgeschlossen, dass ein durch das Ventil strömendes Fluid, insbesondere eine Kühlflüssigkeit, den Sensor umspült und somit ein Messergebnis verfälscht. Weiter ist es bei einer Positionierung des Sensors außerhalb des Hohlraumes auch nicht erforderlich, Datenleitungen des Sensors aus dem Hohlraum, welcher bei geöffnetem Ventil von Fluid durchströmt wird, aus dem Hohlraum hinaus zu führen, wodurch Öffnungen im Gehäuse für die Datenleitungen vermieden werden, welche wiederum auf aufwendige Weise gegenüber dem Fluid abgedichtet werden müssten. Weiter wird dadurch eine genaue Positionsbestimmung des Verschlusses über den gesamten Verstellweg erreicht. Ein entsprechendes Ventil kann grundsätzlich auf verschiedenste Weisen ausgebildet sein. Beispielsweise kann ein solches Ventil als Schieberventil, bei welchem sich der Verschluss entlang einer Dichtfläche bewegt, oder als Sitzventil, bei welchem sich der Verschluss normal zur Dichtfläche bewegt, ausgebildet sein.

Der Permanentmagnet ist in der Regel derart mit dem Verschluss verbunden, dass eine Bewegung des Verschlusses, insbesondere entlang des Verstellweges, eine Bewegung des Permanentmagneten bewirkt. Hierzu kann der Permanentmagnet über einen Mechanismus wie beispielsweise ein Getriebe mit dem Verschluss verbunden sein.

Eine besonders einfache erfindungsgemäße Ausführung wird erreicht, wenn der Permanentmagnet mit dem Verschluss über einen Bügel starr verbunden ist. Eine Bewegung des Permanentmagneten entspricht dann einer Bewegung des Verschlusses, sodass durch ein Erfassen der Bewegung des Permanentmagneten unmittelbar auf die entsprechende Bewegung des Verschlusses geschlossen werden kann.

Um ein zuverlässiges Betätigen des Ventils zu gewährleisten, ist bevorzugt ein Elektromagnet vorgesehen, mit welchem der Verschluss entlang des Verstellweges bewegbar ist. Der Verschluss ist als plattenförmiges Bauteil mit Öffnungen ausgebildet, welches entlang einer Längsrichtung bzw. entlang einer Achse einer Spur des Elektromagneten bewegbar und kinematisch, insbesondere starr, mit einem Anker des Elektromagneten verbunden ist.

Der Verschluss kann mit dem Anker grundsätzlich auf jede mögliche Weise verbunden sein, insbesondere kraft- oder formschlüssig. Dabei kann auch eine Verbindung mit Spiel vorgesehen sein, sodass eine Bewegung des Ankers entlang einer Achsrichtung des Elektromagneten bei einem Richtungswechsel nicht unmittelbar, sondern erst nach Bewegung des Ankers um einen durch das Spiel vordefinierten Weg übertragen wird, um günstige Kraftverhältnisse zu erreichen. Hierzu kann beispielsweise eine Auskragung des Ankers oder ein mit dem Anker starr verbundenes Bauteil wie beispielsweise eine Hülse vorgesehen sein, welche in eine korrespondierende Ausnehmung des Verschlusses wie beispielsweise ein Fenster mit Spiel eingreift und somit eine Bewegung des Ankers über die Auskragung bzw. das Bauteil und endseitige Anschläge in der Ausnehmung auf den Verschluss übertragen wird. Dadurch wird bei einer Bewegung aus einer Extremposition zunächst nur der Anker und, erst nachdem das Spiel überwunden ist, bzw. die Auskragung oder das Bauteil an einem Anschlag anliegt auch der Verschluss bewegt, sodass die bei Beginn der Bewegung zu beschleunigenden Massen reduziert sind.

Weiter kann eine Feder vorgesehen sein, gegen welche eine Öffnungs- oder Schließbewegung des Verschlusses mittels des Elektromagneten erfolgt, sodass in einem stromlosen Zustand des Ventils eine definierte Position des Verschlusses gewährleistet ist.

Die zumindest eine Ventilöffnung korrespondiert üblicherweise mit einer Form bzw. Kontur des Verschlusses, welcher hierzu auch mit der bzw. den Ventilöffnungen korrespondierende Öffnungen aufweisen kann, sodass das Ventil geschlossen ist, wenn die Ventilöffnung bzw. die Ventilöffnungen durch den Verschluss bedeckt ist bzw. sind. Analog ist das Ventil dann geöffnet, wenn der Verschluss die Ventilöffnung nicht bedeckt bzw. wenn die eine oder mehreren Öffnungen des Verschlusses durch eine entsprechende Bewegung des Verschlusses in eine mit der bzw. den Ventilöffnungen korrespondierende Position gebracht sind. Es kann somit vorgesehen sein, dass eine oder mehrere Öffnungen des Verschlusses in der ersten Position des Verschlusses unmittelbar an der Ventilöffnung bzw. den Ventilöffnungen angeordnet sind, sodass ein durch den Einlass in den Hohlraum strömendes Fluid durch die Öffnung des Verschlusses und die in den Auslass mündende Ventilöffnung zum Auslass strömen kann. In der zweiten Position des Verschlusses kann eine Ventilöffnung gänzlich durch den Verschluss bedeckt sein, sodass keine Strömung durch die entsprechende Ventilöffnung möglich ist.

Das Ventil kann auch mit einem Einlass und mehreren Auslässen ausgebildet sein, wobei abhängig von einer Position des Verschlusses eine erste Ventilöffnung eines ersten Auslasses oder eine zweite Ventilöffnung eines zweiten Auslasses geöffnet bzw. verschlossen sind. Durch eine Verschiebung des Verschlusses entlang des Verstellweges kann somit ein Strömungspfad vom Einlass zu einem ersten Auslass oder zu einem zweiten Auslass geschaffen bzw. blockiert werden.

Beispielsweise kann vorgesehen sein, dass das Ventil einen Einlass, einen ersten Auslass und einen zweiten Auslass aufweist, wobei durch eine Bewegung des Verschlusses entlang des Verstellweges eine fluidische Verbindung des Einlasses mit dem ersten Auslass und/oder eine fluidische Verbindung des Einlasses mit dem zweiten Auslass herstellbar und unterbrechbar ist. Somit ist auf konstruktiv einfache Weise ein Ventil gebildet, mit welchem ein durch den Einlass strömendes Medium wahlweise in einen von zwei Auslässen geleitet werden kann. Dabei kann auch eine Ventilstellung vorgesehen sein, in welcher jeder Auslass verschlossen ist, sodass keine Strömung durch das Ventil möglich ist.

Um dabei einen besonders einfachen Aufbau zu erreichen, kann vorgesehen sein, dass der Verschluss in der ersten Position eine oder mehrere vom Hohlraum in den zweiten Auslass mündende Ventilöffnungen verschließt und eine oder mehrere vom Hohlraum in den ersten Auslass mündende Ventilöffnungen freigibt. Analog kann das Ventil derart ausgebildet sein, dass der Verschluss in der zweiten Position eine oder mehrere vom Hohlraum in den zweiten Auslass mündende Ventilöffnungen freigibt und eine oder mehrere vom Hohlraum in den ersten Auslass mündende Ventilöffnungen verschließt. Mit einer Bewegung des Verschlusses von der ersten Position in die zweite Position kann somit eine Strömung vom Einlass durch den Hohlraum zum ersten Auslass beendet und eine Strömung vom Einlass durch den Hohlraum zum zweiten Auslass freigegeben werden. Mit einem derartigen Ventil kann beispielsweise in einem Kühlmittelkreislauf eine Strömung eines Mediums wahlweise in einen Wärmetauscher oder eine den Wärmetauscher überbrückende Bypass-Leitung geführt werden. Um günstige Strömungsverhältnisse im Ventil zu erreichen, sind bevorzugt zumindest zwei Ventilöffnungen je Auslass vorgesehen, mit welchem der Einlass durch das Ventil verbindbar ist.

Günstig ist es, wenn der Permanentmagnet im Gehäuse angeordnet ist, sodass der Permanentmagnet dann, wenn ein Fluid bei geöffnetem Ventil vom Einlass durch den Hohlraum zum Auslass strömt, vom Fluid umspült wird. Es ist somit nicht erforderlich, einen Durchlass in das Gehäuse einzubringen, mit welchem eine Bewegung des Verschlusses von einem Inneren des Gehäuses bzw. vom Hohlraum aus zu einem Äußeren übertragen wird. Dadurch entfällt eine aufwendige Abdichtung eines solchen Durchlasses gänzlich.

Bevorzugt ist der Sensor außen am Gehäuse angeordnet, sodass der Sensor dann, wenn ein Fluid bei geöffnetem Ventil vom Einlass durch den Hohlraum zum Auslass strömt, vom Fluid nicht umspült wird. Dadurch werden ein besonders genaues Messergebnis sowie eine lange Standzeit des Sensors erreicht.

Zur Erreichung eines Messergebnisses mit hoher Genauigkeit ist es günstig, wenn das Gehäuse aus einem nicht magnetisierbaren Material, insbesondere einem Kunststoff oder einem Metall, bevorzugt Aluminium, besteht. Es kann dann auch mit einem außerhalb des Gehäuses angeordneten Sensor eine Position des Permanentmagneten, welcher sich im Gehäuse befinden kann, mit hoher Genauigkeit bestimmt werden. Um ein besonders genaues Messergebnis zu erreichen, ist es bevorzugt vorgesehen, dass der Permanentmagnet derart im Hohlraum positioniert ist, dass dieser bei geöffnetem Ventil außerhalb einer direkten Verbindung von Einlass und Auslass angeordnet ist. Somit werden am Magnet geringe Strömungsgeschwindigkeiten erreicht, wodurch über einen besonders geringen abrasiven Verschleiß eine besonders lange Standzeit gegeben ist. Erfindungsgemäß ist der Permanentmagnet endseitig im Hohlraum in einer seitlichen Aussparung positioniert. Insbesondere ist der Permanentmagnet außermittig positioniert, zumal dort üblicherweise besonders geringere Strömungsgeschwindigkeiten vorliegen. Eine Verbindung des in der Regel mittig im Hohlraum angeordneten Verschlusses mit dem in der Regel endseitig im Hohlraum angeordneten Permanentmagneten erfolgt über einen starren Bügel.

Um ein besonders genaues Messergebnis zu erhalten, ist der Permanentmagnet derart im Hohlraum angeordnet, dass der Permanentmagnet in jeder bei einem Betrieb des Ventils möglichen Position des Verschlusses einen Abstand zum Gehäuse von weniger als 10 mm, insbesondere weniger als 5 mm, aufweist. Ein entsprechend geringer Abstand gewährleistet ein gutes Messergebnis. Wenngleich somit ein geringer Abstand vorteilhaft für ein genaues Messergebnis ist, ist gleichzeitig durch einen minimalen Abstand zwischen dem Gehäuse und dem Permanentmagnet auch sichergestellt, dass der Permanentmagnet bei einer Bewegung des Verschlusses nicht am Gehäuse gleitet, wodurch eine Standzeit verringert werden würde. Der Permanentmagnet ist daher üblicherweise in jeder Betriebsposition des Verschlusses vom Gehäuse beabstandet.

Zur Erreichung einer kompakten Bauweise und eines Messergebnisses mit hoher Genauigkeit, ist es ferner vorteilhaft, wenn der Sensor außen am Gehäuse an einer mit einer Position des Permanentmagneten korrespondierenden Position angeordnet ist. Der Sensor ist dann trotz Positionierung außerhalb des Gehäuses mit minimalem Abstand zum Permanentmagnet angeordnet, sodass eine Bewegung des Permanentmagneten, insbesondere parallel zum Verstellweg, besonders genau erfasst werden kann. Bevorzugt ist der Sensor mit einem Abstand zum Gehäuse von weniger als 5 mm angeordnet. Der Sensor kann mit dem Gehäuse auch verklebt sein, beispielsweise über eine Vergussmasse wie ein Harz.

Mit Vorteil ist vorgesehen, dass ein Abstand zwischen dem Permanentmagneten und dem Sensor in jeder bei einem Betrieb des Ventils möglichen Position des Verschlusses weniger als 15 mm, erfindungsgemäß weniger als 10 mm, beträgt. Dadurch lässt sich die Position des Permanentmagneten mit dem Sensor auch durch eine Gehäusewand hindurch und über den gesamten Verstellweg besonders genau bestimmen.

Es hat sich bewährt, dass der Sensor einen Hall-Sensor aufweist oder durch einen Hall-Sensor gebildet ist. Auf diese Weise kann die Position des Permanentmagneten auch durch das Gehäuse hindurch besonders genau bestimmt werden.

Eine Ausgangsspannung eines Sensors, mit welchem eine Position eines Permanentmagneten erfassbar ist, insbesondere eines Hall-Sensors, kann häufig nicht unmittelbar in einer Fahrzeugelektronik weiterverarbeitet werden. Es kann daher günstig sein, wenn dem Hall-Sensor eine Elektronik nachgeschaltet oder der Hall-Sensor Teil eines integrierten Schaltkreises ist, mit welchem basierend auf einem Ausgangssignal des Sensors eine beliebig weiter verarbeitbare Ausgangsspannung erzeugbar ist. Hierzu kann der Sensor in einem Sensormodul angeordnet sein, welches neben dem Sensor auch eine entsprechende Elektronik enthalten kann.

Um das Ventil besonders einfach in ein Fahrzeug mit gegebener Bordelektronik einbinden zu können, ist bevorzugt vorgesehen, dass ein elektrisches Ausgangssignal eines Sensormoduls, welches den Sensor enthält, bei geschlossenem Ventil einer vordefinierten ersten Spannung entspricht. Diese Spannung kann beispielsweise zwischen 0,5 Volt und 1,0 Volt, typischerweise 0,75 Volt, betragen.

Es ist dann bevorzugt vorgesehen, dass ein elektrisches Ausgangssignal eines Sensormoduls, welches den Sensor enthält, bei geöffnetem Ventil einer vordefinierten zweiten Spannung entspricht. Diese zweite Spannung unterscheidet sich üblicherweise von der ersten Spannung und kann beispielsweise zwischen 4,0 Volt und 4,5 Volt, typischerweise im Bereich von etwa 4,25 Volt, liegen.

Das Sensormodul kann beispielsweise den Sensor und ein Elektronikbauteil enthalten, mit welchem eine elektrische Ausgangsspannung des Sensors verstärkt und relativ zu einem Nullpunkt verschoben werden kann, um gezielte Ausgangsspannungen des Sensormoduls bei bestimmten Ventilzuständen zu erreichen.

Derart definierte Spannungen können beispielsweise im Rahmen einer Kalibrierung erreicht werden, welche beispielsweise im Rahmen einer Herstellung, einer Qualitäts- oder Funktionsprüfung erfolgen kann. Über eine zwischen der vordefinierten ersten Spannung und der vordefinierten zweiten Spannung liegende, bei einem Betrieb gemessene Spannung kann dann über einen Zusammenhang zwischen einer aktuellen Ist-Position des Verschlusses und der gemessenen Spannung, welcher Zusammenhang beispielsweise linear sein kann, an jeder Position des Verschlusses über eine Ausgangsspannung des Sensormoduls auf die Position des Verschlusses geschlossen werden.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 und 2 ein erfindungsgemäß ausgebildetes Ventil in unterschiedlichen Betriebszuständen;
Fig. 3 eine weitere Ansicht eines erfindungsgemäßen Ventils;
Fig. 4 ein Detail eines erfindungsgemäßen Ventils.

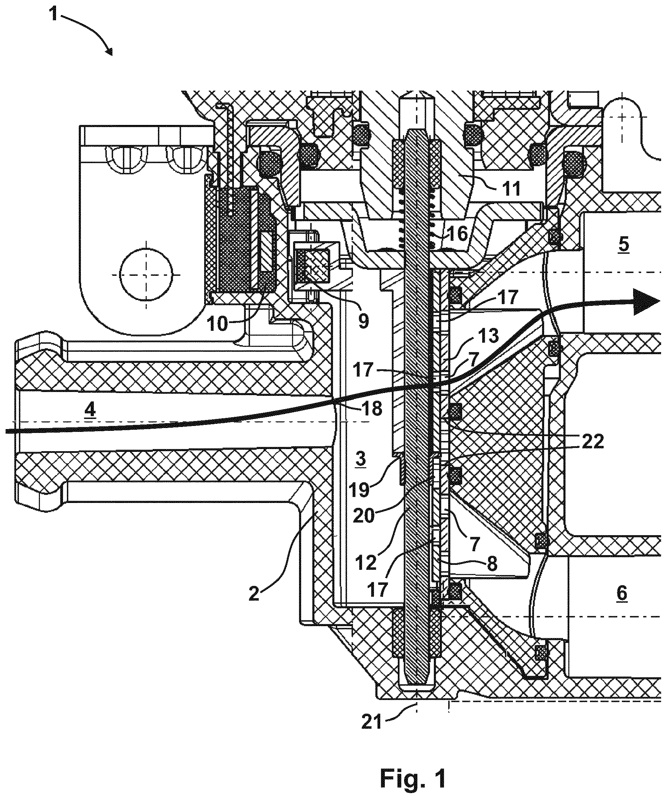

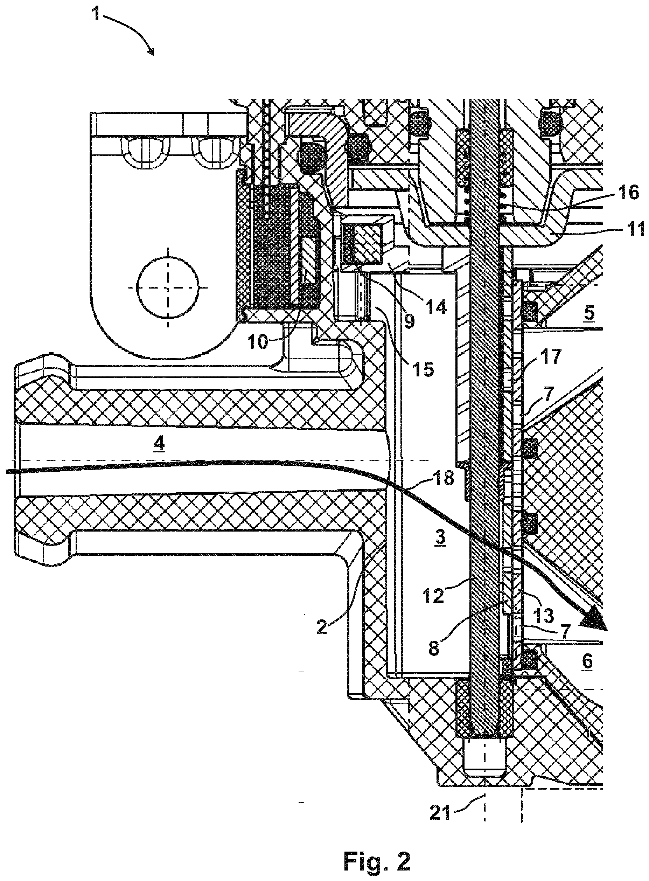

Fig. 1 bis 3 zeigen ein als Schieberventil ausgebildetes erfindungsgemäßes Ventil 1 in Schnittdarstellung, wobei Fig. 1 das Ventil 1 in einem ersten Betriebszustand zeigt, in welchem ein Einlass 4 des Ventils 1 mit einem ersten Auslass 5 des Ventils 1 fluidisch verbunden ist, während Fig. 2 das Ventil 1 in einem zweiten Betriebszustand zeigt, in welchem der Einlass 4 mit einem zweiten Auslass 6 fluidisch verbunden ist, jedoch keine fluidische Verbindung zwischen dem Einlass 4 und dem ersten Auslass 5 besteht.

Es versteht sich, dass ein erfindungsgemäßes Ventil 1 auch mit nur einem Auslass 5, 6, mehr als einem Einlass 4 und/oder mehr als zwei Auslässen 5, 6 ausgebildet sein kann.

Das in Fig. 1 dargestellte Ventil 1 weist wie ersichtlich einen Einlass 4 und zwei Auslässe 5, 6 auf, welche in einen Hohlraum 3 münden. Zwischen dem Hohlraum 3 und dem ersten Auslass 5 sowie zwischen dem Hohlraum 3 und dem zweiten Auslass 6 ist ein Dichtsitz 13 mit Ventilöffnungen 7 angeordnet, wobei sowohl in den ersten Auslass 5 mündende Ventilöffnungen 7 als auch in den zweiten Auslass 6 mündende Ventilöffnungen 7 vorgesehen sind.

Weiter ist ein mittels eines Elektromagneten entlang einer Achsrichtung über einen Verstellweg translatorisch verschiebbarer, plattenförmiger Verschluss 8 im Hohlraum 3 positioniert, welcher Verschluss 8 Öffnungen 17 aufweist und mit einem Anker 12 des Elektromagneten starr verbunden ist. Im dargestellten Ausführungsbeispiel wird eine Bewegung des Ankers 12, welche durch eine Bestromung einer Spule des Elektromagneten ausgelöst sein kann, über einen Formschluss auf den Verschluss 8 übertragen. Hierzu sind der Anker 12 und der Verschluss 8 in einer Ebene normal zu einer Bewegungsrichtung bzw. normal zu einer Richtung einer Achse 21 des Ankers 12 im Gehäuse 2 derart positioniert, dass der Anker 12 und der Verschluss 8 nur entlang der Bewegungsrichtung bzw. entlang der Achse 21 relativ zum Gehäuse frei bewegbar sind, und greift eine mit dem Anker 12 verbundene Hülse 19 in ein Fenster 20 des Verschlusses 8 ein, um eine Kraft in Achsrichtung bzw. parallel zum Verstellweg vom Anker 12 auf den Verschluss 8 zu übertragen. Das Fenster 20 ist hier wie dargestellt größer als ein eingreifender Teil der Hülse 19, sodass die formschlüssige Kraftübertragung mit Spiel erfolgt, indem die Hülse 19 je nach Richtung einer Bewegung an einem von zwei Anschlägen 22 des Fensters 20 anliegt. Wie ersichtlich ist zwischen dem Anker 12 und einem Kern 11 des Elektromagneten eine Feder 16 positioniert, um einen günstigen Kraftverlauf während eines Schaltvorganges zu erreichen.

Wie dargestellt sind in dem in Fig. 1 dargestellten ersten Betriebszustand des Ventils 1, in welchem sich der Verschluss 8 in einer ersten Position befindet, zwei Öffnungen 17 des Verschlusses 8 unmittelbar angrenzend an Ventilöffnungen 7 positioniert, welche in den ersten Auslass 5 münden, sodass in dem in Fig. 1 dargestellten ersten Betriebszustand eine fluidische Verbindung vom Einlass 4 über die Öffnungen 17 des Verschlusses 8 und die Ventilöffnungen 7, welche in den ersten Auslass 5 münden, gegeben ist. Beispielhaft ist hierzu ein vom Einlass 4 durch den Hohlraum 3 sowie eine der Öffnungen 17 des Verschlusses 8 und eine der in den ersten Auslass 5 mündenden Ventilöffnungen 7 verlaufender Strömungspfad 18 dargestellt, entlang welchem ein Medium vom Einlass 4 zum ersten Auslass 5 strömen kann.

Die in den zweiten Auslass 6 mündenden Ventilöffnungen 7 des Dichtsitzes 13 sind beim ersten Betriebszustand durch den Verschluss 8 verschlossen, sodass keine fluidische Verbindung zwischen dem Einlass 4 und dem zweiten Auslass 6 besteht. Der Verschluss 8 befindet sich somit in dem in Fig. 1 dargestellten ersten Betriebszustand in einer ersten Extremposition, in welcher die in den ersten Auslass 5 mündenden Ventilöffnungen 7 gänzlich geöffnet und die in den zweiten Auslass 6 mündenden Ventilöffnungen 7 verschlossen sind.

Umgekehrt sind im in Fig. 2 dargestellten zweiten Betriebszustand, in welchem sich der Verschluss 8 in der zweiten Position befindet, jene Ventilöffnungen 7 des Dichtsitzes 13 durch den Verschluss 8 verschlossen, welche in den ersten Auslass 5 münden, und sind die in den zweiten Auslass 6 mündenden Ventilöffnungen 7 des Dichtsitzes 13 durch den Verschluss 8 bzw. eine Öffnung 17 des Verschlusses 8 freigegeben, sodass eine fluidische Verbindung zwischen dem Einlass 4 und dem zweiten Auslass 6 über die in den zweiten Auslass 6 mündenden Ventilöffnungen 7 gegeben ist. Beispielhaft ist hierzu ein vom Einlass 4 durch den Hohlraum 3 sowie eine der Öffnungen 17 des Verschlusses 8 und eine in den zweiten Auslass 6 mündende Ventilöffnung 7 verlaufender, geöffneter Strömungspfad 18 dargestellt, entlang welchem ein Medium vom Einlass 4 zum zweiten Auslass 6 strömen kann. Der Verschluss 8 befindet sich somit in dem in Fig. 2 dargestellten zweiten Betriebszustand in einer zweiten Extremposition, in welcher die in den ersten Auslass 5 mündenden Ventilöffnungen 7 gänzlich verschlossen und die in den zweiten Auslass 6 mündenden Ventilöffnungen 7 vollständig geöffnet sind.

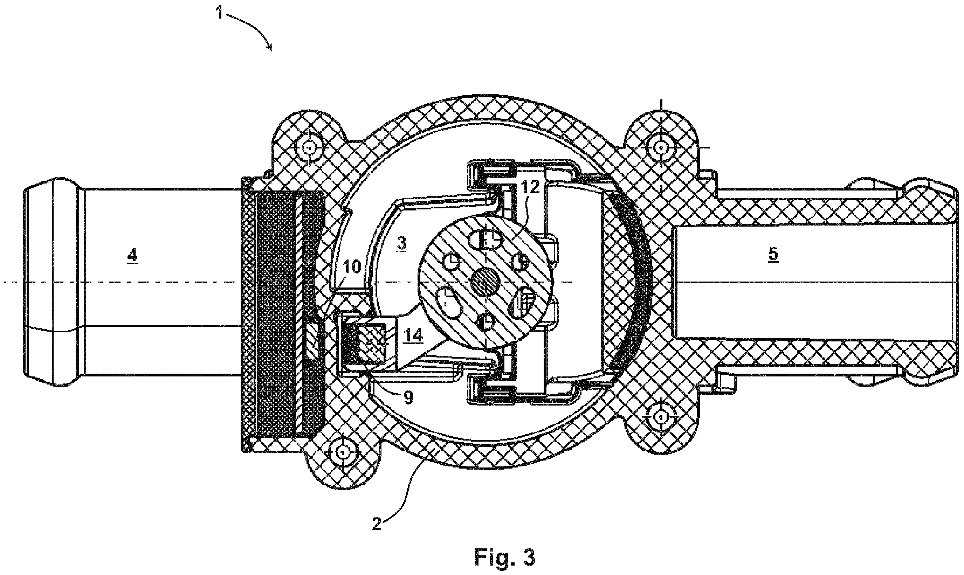

Um eine Position des Verschlusses 8 auch während eines Betriebes kontinuierlich und auf einfache Weise erfassen zu können, ist ein mit dem Verschluss 8 kinematisch, hier starr, verbundener Permanentmagnet 9 im Hohlraum 3 vorgesehen. Wie ersichtlich ist der Permanentmagnet 9 an einem oberen Ende des Hohlraumes 3 in einer seitlichen Aussparung 15 angeordnet, sodass dieser weder eine Strömung durch den Hohlraum 3 behindert noch ein Magnetfeld des Permanentmagneten 9, üblicherweise eine Kühlflüssigkeit wie Wasser, gegebenenfalls mit entsprechenden Zusätzen, durch die Strömung beeinflusst ist. Weiter wird an der entsprechenden Position in der Regel nur eine geringe Strömungsgeschwindigkeit erreicht, wodurch ein günstiger Verschleiß gegeben ist. Der Permanentmagnet 9 ist mit dem Verschluss 8 über einen Bügel 14 verbunden, welcher in den Fig. 1 und Fig. 2 nur teilweise ersichtlich ist, zumal dieser teilweise außerhalb der durch eine Längsachse des Elektromagneten verlaufenden Schnittebene liegt, wie sich aus Fig. 3 ergibt.

Zur Erfassung einer Position des Permanentmagneten 9 ist außenseitig am Gehäuse 2 ein Sensormodul 10 angeordnet, welches als integrierter Schaltkreis mit einem Hall-Sensor ausgebildet ist. Mit diesem Sensormodul 10 kann eine Position des durch den Permanentmagnet 9 bedingten Magnetfeldes durch das Gehäuse 2 hindurch erfasst werden, welches Gehäuse im dargestellten Ausführungsbeispiel aus Aluminium ausgebildet ist, jedoch grundsätzlich natürlich auch aus einem anderen Material wie beispielsweise einem Kunststoff bestehen kann. Das Sensormodul 10 kann mittels einer Vergussmasse wie beispielweise eines Harzes mit dem Gehäuse 2 verbunden sein, um eine stabile und robuste Verbindung zu erreichen. Alternativ oder ergänzend kann das Sensormodul 10 auch form- und/oder kraftschlüssig mit dem Gehäuse 2 verbunden sein, insbesondere mittels einer Schraubverbindung.

Das Sensormodul 10 kann beispielsweise derart kalibriert sein, dass dieses im in Fig. 1 dargestellten ersten Betriebszustand, also wenn eine fluidische Verbindung vom Einlass 4 zum ersten Auslass 5 besteht und eine fluidische Verbindung vom Einlass 4 zum zweiten Auslass 6 verschlossen ist, eine elektrische Spannung von etwa 0,75 Volt ausgibt und im in Fig. 2 dargestellten zweiten Betriebszustand, also wenn eine fluidische Verbindung vom Einlass 4 zum ersten Auslass 5 verschlossen ist und eine fluidische Verbindung vom Einlass 4 zum zweiten Auslass 6 besteht, eine elektrische Spannung von etwa 4,25 Volt ausgibt, sodass elektronisch auf einfache Weise bestimmbar ist, in welchem Betriebszustand sich das Ventil 1 befindet bzw. auch eine Position des Verschlusses 8 zwischen den in Fig. 1 und Fig. 2 dargestellten Extrempositionen entlang des Verstellweges erfassbar ist. Eine aktuelle Ist-Position des Verschlusses 8 zwischen dem ersten Betriebszustand und dem zweiten Betriebszustand kann beispielsweise über einen linearen Zusammenhang der Ausgangsspannung des Sensor-Moduls und der Ist-Position bestimmt werden.

Eine Kalibrierung dieser Spannungen wird mittels einer dem Hall-Sensor im Sensormodul 10 nachgeschalteten Elektronik erreicht, mit welcher eine Ausgangsspannung des Hall-Sensors verstärkt und relativ zu einem Bezugspotenzial bzw. einem Nullpunkt verschoben werden kann, um unabhängig von Fertigungstoleranzen bzw. einem tatsächlichen Abstand zwischen dem Permanentmagnet 9 und dem Hall-Sensor bei geschlossenem und geöffnetem Ventil 1 jeweils definierte Spannungen ausgeben zu können, welche in einer Fahrzeugelektronik weiterverarbeitet werden können. Die Kalibrierung des Sensormoduls 10 kann beispielsweise im Rahmen einer Funktionsprüfung nach Herstellung des Ventils 1 erfolgen.

Fig. 3 zeigt eine Draufsicht auf das bereits in Fig. 1 und Fig. 2 abgebildete Ventil 1. Wie auch hier ersichtlich ist der Permanentmagnet 9 über einen Bügel 14 mit dem Verschluss 8 verbunden und außermittig im Hohlraum 3 positioniert, sodass eine Strömungsgeschwindigkeit im Bereich des Permanentmagneten 9 gering ist.

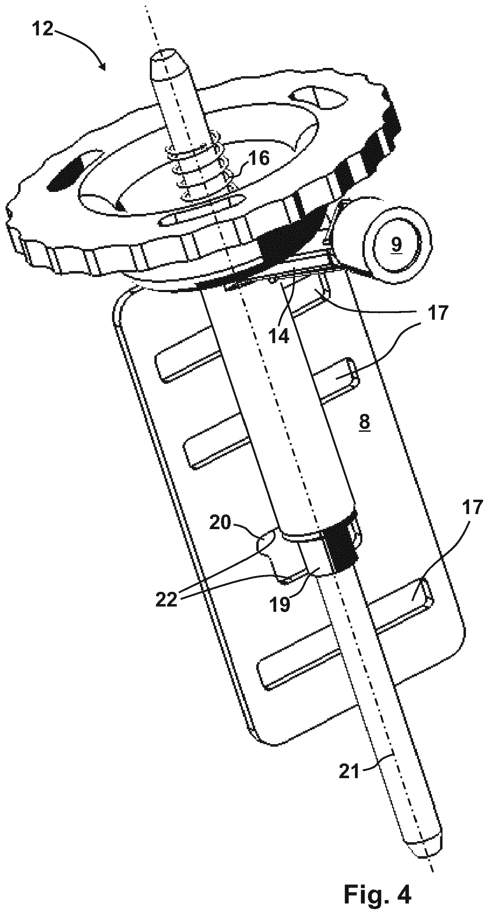

Fig. 4 zeigt einen Anker 12 eines erfindungsgemäßen Ventils 1 samt einem mit diesem verbundenen Verschluss 8, wobei eine Verbindung zwischen Anker 12 und Verschluss 8 in Richtung einer Achse 21 des Elektromagneten bzw. in Bewegungsrichtung zum Übertragen einer Bewegung hier formschlüssig über eine in ein Fenster 20 des Verschlusses 8 eingreifende Hülse 19 erfolgt, welche Hülse 19 starr mit dem Anker 12 verbunden bzw. ein Teil des Ankers 12 ist. Die Hülse 19 kann wie dargestellt grundsätzlich auch mit einem Spiel im Fenster 20 positioniert sein, sodass bei einer Bewegung des Ankers 12 aus einer Extremposition in eine Richtung der Achse 21 zunächst nur der Anker 12 samt Hülse 19 bewegt wird, bis die Hülse 19 über eine Breite des Fensters 20 in Achsrichtung bewegt wird, und somit endseitig im Fenster 20 an einem Anschlag 22 des Fensters 20 anliegt, sodass bei weiterer Bewegung des Ankers 12 in entsprechender Richtung der Verschluss 8 durch die in das Fenster 20 eingreifende bzw. an einem Anschlag 22 des Fensters 20 anliegende Hülse 19 mitbewegt wird. Entsprechend kann eine Bewegung in die entgegengesetzte Richtung erfolgen, wobei die für die Bewegung des Verschlusses 8 erforderliche Kraft nach einer Bewegung der Hülse 19 im Fenster 20 vom Anker 12 über die Hülse 19 auf den am gegenüberliegenden Ende des Fensters 20 angeordneten Anschlag 22 übertragen wird. Dadurch ist eine besonders effiziente Betätigung des Ventils 1 ermöglicht.

Wie hier ersichtlich ist der Verschluss 8 im Wesentlichen plattenförmig ausgebildet und sind die Öffnungen 17 im Verschluss 8, welche abhängig von der Position des Verschlusses 8 mit den Ventilöffnungen 7 korrespondieren, etwa rechteckförmig ausgebildet. Weiter ist auch in Fig. 4 ersichtlich, dass der Permanentmagnet 9 mit dem Anker 12 über einen Bügel 14 verbunden ist, sodass der Permanentmagnet 9 wie bereits in Fig. 1 und Fig. 2 dargestellt im Betrieb nahe an einer Gehäusewand angeordnet ist, um ein genaues Messergebnis trotz des außenseitig am Gehäuse 2 angeordneten Sensormoduls 10 zu erreichen.

Wenngleich in den Fig. 1 bis Fig. 4 ein als Schieberventil ausgebildetes Ventil 1 dargestellt ist, bei welchem der Verschluss 8 somit im Wesentlichen entlang einer Dichtfläche des Dichtsitzes 13 und normal zu einer Strömung bewegt wird, versteht es sich, dass die Erfindung nicht auf ein Schieberventil beschränkt ist, sondern ein erfindungsgemäßes Ventil 1 natürlich auch mit einem nicht entlang einer Dichtfläche und/oder einem etwa entlang der Strömung bewegten Verschluss 8 oder Dichtkörper ausgebildet sein kann, beispielsweise als Sitzventil.

Mit einem erfindungsgemäßen Ventil 1 ist die Bestimmung einer aktuellen Position des Verschlusses 8 bzw. einer Ventilstellung auf einfache und gleichzeitig robuste und genaue Weise über den gesamten Verstellweg auch während eines Betriebes bestimmbar. Ein entsprechendes Ventil 1 kann grundsätzlich in verschiedensten Bereichen eingesetzt werden. Bevorzugt wird ein entsprechendes Ventil 1 für ein Kraftfahrzeug, insbesondere in einem Kühlmittelkreislauf eines Kraftfahrzeuges, eingesetzt.

## Patentansprüche

1. Schieberventil (1) für einen Kühlmittelkreislauf in einem Kraftfahrzeug mit einem Gehäuse (2), welches einen Hohlraum (3) aufweist, in welchen ein Einlass (4) und ein Auslass (5, 6) münden, wobei der Einlass (4) mit dem Auslass (5, 6) in einem geöffneten Zustand des Schieberventils (1) durch einen durch den Hohlraum (3) verlaufenden Strömungspfad (18) verbunden ist, einer zwischen dem Einlass (4) und dem Auslass (5, 6) entlang des Strömungspfades (18) im Hohlraum (3) angeordneten Ventilöffnung (7) und einem plattenförmigen Verschluss (8), welcher relativ zum Gehäuse (2) von einer ersten Position entlang eines Verstellweges in eine zweite Position bewegbar ist, wobei der Verschluss (8) die Ventilöffnung (7) in der ersten Position zu einem geringeren Grad als in der zweiten Position verschließt, **dadurch gekennzeichnet, dass** mit dem Verschluss (8) ein Permanentmagnet (9) über einen Bügel starr verbunden ist, sodass eine Bewegung des Verschlusses (8) entlang des Verstellweges eine Bewegung des Permanentmagneten (9) bewirkt, wobei der Permanentmagnet derart im Hohlraum angeordnet ist, dass der Permanentmagnet (9) in jeder bei einem Betrieb des Schieberventils (1) möglichen Position des Verschlusses (8) einen Abstand zum Gehäuse (2) von weniger als 10 mm aufweist und wobei außerhalb des Hohlraumes (3) ein Sensor angeordnet ist, mit welchem eine Position des Permanentmagneten (9) erfassbar ist, wobei der Permanentmagnet (9) endseitig, in einer seitlichen Aussparung (15) im Hohlraum (3) derart positioniert ist, dass dieser bei geöffnetem Schieberventil (1) außerhalb einer direkten Verbindung von Einlass (4) und Auslass (5, 6) angeordnet ist und wobei ein Abstand zwischen dem Permanentmagneten (9) und dem Sensor in jeder bei einem Betrieb des Schieberventils (1) möglichen Position des Verschlusses (8) weniger als 10 mm beträgt.

2. Schieberventil (1) nach Anspruch 1, **dadurch gekennzeichnet, dass** ein Elektromagnet vorgesehen ist, mit welchem der Verschluss (8) entlang des Verstellweges bewegbar ist.

3. Schieberventil (1) nach Anspruch 1 oder 2, **dadurch gekennzeichnet, dass** das Schieberventil (1) einen Einlass (4), einen ersten Auslass (5) und einen zweiten Auslass (6) aufweist, wobei durch eine Bewegung des Verschlusses (8) entlang des Verstellweges eine fluidische Verbindung des Einlasses (4) mit dem ersten Auslass (5) und/oder eine fluidische Verbindung des Einlasses (4) mit dem zweiten Auslass (6) herstellbar und unterbrechbar ist.

4. Schieberventil (1) nach Anspruch 3, **dadurch gekennzeichnet, dass** der Verschluss (8) in der ersten Position eine oder mehrere vom Hohlraum (3) in den zweiten Auslass (6) mündende Ventilöffnungen (7) verschließt und eine oder mehrere vom Hohlraum (3) in den ersten Auslass (5) mündende Ventilöffnungen (7) freigibt.

5. Schieberventil (1) nach Anspruch 1 oder 4, **dadurch gekennzeichnet, dass** der Permanentmagnet (9) im Gehäuse (2) angeordnet ist, sodass der Permanentmagnet (9) dann, wenn ein Fluid bei geöffnetem Schieberventil (1) vom Einlass (4) durch den Hohlraum (3) zum Auslass (5, 6) strömt, vom Fluid umspült wird.

6. Schieberventil (1) nach einem der Ansprüche 1 bis 5, **dadurch gekennzeichnet, dass** der Sensor außen am Gehäuse (2) angeordnet ist, sodass der Sensor dann, wenn ein Fluid bei geöffnetem Schieberventil (1) vom Einlass (4) durch den Hohlraum (3) zum Auslass (5, 6) strömt, vom Fluid nicht umspült wird.

7. Schieberventil (1) nach einem der Ansprüche 1 bis 6, **dadurch gekennzeichnet, dass** das Gehäuse (2) aus einem nicht magnetisierbaren Material, insbesondere einem Kunststoff oder einem Metall, bevorzugt Aluminium, besteht.

8. Schieberventil (1) nach einem der Ansprüche 1 bis 7, **dadurch gekennzeichnet, dass** der Permanentmagnet (9) derart im Hohlraum (3) angeordnet ist, dass der Permanentmagnet (9) in jeder bei einem Betrieb des Schieberventils (1) möglichen Position des Verschlusses (8) einen Abstand zum Gehäuse (2) von weniger als 5 mm aufweist.

9. Schieberventil (1) nach einem der Ansprüche 1 bis 8, **dadurch gekennzeichnet, dass** der Sensor außen am Gehäuse (2) an einer mit einer Position des Permanentmagneten (9) korrespondierenden Position angeordnet ist.

10. Schieberventil (1) nach einem der Ansprüche 1 bis 9, **dadurch gekennzeichnet, dass** ein Abstand zwischen dem Permanentmagneten (9) und dem Sensor in jeder bei einem Betrieb des Schieberventils (1) möglichen Position des Verschlusses (8) weniger als 5 mm beträgt.

11. Schieberventil (1) nach einem der Ansprüche 1 bis 10, **dadurch gekennzeichnet, dass** der Sensor einen Hall-Sensor aufweist oder durch einen Hall-Sensor gebildet ist.

12. Schieberventil (1) nach einem der Ansprüche 1 bis 11, **dadurch gekennzeichnet, dass** ein elektrisches Ausgangssignal eines Sensormoduls (10), welches den Sensor enthält, bei geschlossenem Schieberventil (1) einer vordefinierten ersten Spannung entspricht.

13. Schieberventil (1) nach einem der Ansprüche 1 bis 12, **dadurch gekennzeichnet, dass** ein elektrisches Ausgangssignal eines Sensormoduls (10), welches den Sensor enthält, bei geöffnetem Schieberventil (1) einer vordefinierten zweiten Spannung entspricht.

## Claims

1. Slide valve (1) for a coolant circuit in a motor vehicle having a housing (2), which has a cavity (3), into which an inlet (4) and an outlet (5, 6) open, wherein the inlet (4) is connected to the outlet (5, 6) in an open state of the slide valve (1) by a flow path (18) running through the cavity (3), a valve opening (7) arranged between the inlet (4) and the outlet (5, 6) along the flow path (18) in the cavity (3) and a plate-shaped closure (8), which can be moved relative to the housing (2) from a first position along an adjustment path into a second position, wherein the closure (8) closes the valve opening (7) in the first position to a lesser extent than in the second position, **characterized in that** a permanent magnet (9) is rigidly connected to the closure (8) via a bracket such that a movement of the closure (8) along the adjustment path causes a movement of the permanent magnet (9), wherein the permanent magnet is arranged in the cavity in such a way that the permanent magnet (9) has a distance to the housing (2) of less than 10 mm in every position of the closure (8) possible when the slide valve (1) is in operation and wherein a sensor is arranged outside the cavity (3), with which a position of the permanent magnet (9) can be detected, wherein the permanent magnet (9) is positioned at the end in a lateral recess (15) in the cavity (3) in such a way that this is arranged outside a direct connection between the inlet (4) and outlet (5, 6) when the slide valve (1) is open and wherein the distance between the permanent magnet (9) and the sensor is less than 10 mm in every position of the closure (8) possible when the slide valve (1) is in operation.

2. Slide valve (1) according to Claim 1, **characterized in that** an electromagnet is provided, with which the closure (8) can be moved along the adjustment path.

3. Slide valve (1) according to Claim 1 or 2, **characterized in that** the slide valve (1) has an inlet (4), a first outlet (5) and a second outlet (6), wherein a movement of the closure (8) along the adjustment path can establish and break a fluidic connection between the inlet (4) and the first outlet (5) and/or a fluidic connection between the inlet (4) and the second outlet (6) .

4. Slide valve (1) according to Claim 3, **characterized in that** the closure (8), in the first position, closes one or more valve openings (7) opening from the cavity (3) into the second outlet (6) and opens one or more valve openings (7) opening from the cavity (3) into the first outlet (5).

5. Slide valve (1) according to Claim 1 or 4, **characterized in that** the permanent magnet (9) is arranged in the housing (2) such that when a fluid flows from the inlet (4) through the cavity (3) to the outlet (5, 6) when the slide valve (1) is open, fluid flows around the permanent magnet (9).

6. Slide valve (1) according to one of Claims 1 to 5, **characterized in that** the sensor is arranged on the outside of the housing (2) such that when a fluid flows from the inlet (4) through the cavity (3) to the outlet (5, 6) when the slide valve (1) is open, fluid does not flow around the sensor.

7. Slide valve (1) according to one of Claims 1 to 6, **characterized in that** the housing (2) consists of a non-magnetizable material, in particular a plastic or a metal, preferably aluminium.

8. Slide valve (1) according to one of Claims 1 to 7, **characterized in that** the permanent magnet (9) is arranged in the cavity (3) in such a way that the permanent magnet (9) has a distance to the housing (2) of less than 5 mm in every position of the closure (8) possible when the slide valve (1) is in operation.

9. Slide valve (1) according to one of Claims 1 to 8, **characterized in that** the sensor is arranged on the outside of the housing (2) at a position corresponding to a position of the permanent magnet (9).

10. Slide valve (1) according to one of Claims 1 to 9, **characterized in that** a distance between the permanent magnet (9) and the sensor is less than 5 mm in every position of the closure (8) possible when the slide valve (1) is in operation.

11. Slide valve (1) according to one of Claims 1 to 10, **characterized in that** the sensor has a Hall sensor or is formed by a Hall sensor.

12. Slide valve (1) according to one of Claims 1 to 11, **characterized in that** an electrical output signal of a sensor module (10), which contains the sensor, corresponds to a predefined first voltage when the slide valve (1) is closed.

13. Slide valve (1) according to one of Claims 1 to 12, **characterized in that** an electrical output signal of a sensor module (10), which contains the sensor, corresponds to a predefined second voltage when the slide valve (1) is open.

## Revendications

1. Vanne à tiroir (1) pour circuit de liquide de refroidissement dans un véhicule automobile comportant un boîtier (2), qui présente une cavité (3), dans laquelle une entrée (4) et une sortie (5, 6) débouchent, dans laquelle l'entrée (4) est reliée à la sortie (5, 6) dans un état ouvert de la vanne à tiroir (1) par un trajet d'écoulement (18) traversant la cavité (3), une ouverture de vanne (7)disposée entre l'entrée (4) et la sortie (5, 6) disposée le long du trajet d'écoulement (18) dans la cavité (3) et une fermeture en forme de plaque (8) qui peut être déplacée par rapport au boîtier (2) d'une première position le long d'une trajectoire de réglage jusqu'à une deuxième position, dans laquelle la fermeture (8) ferme l'ouverture de soupape (7) dans une moindre mesure dans la première position que dans la deuxième position, **caractérisée en ce que** avec un aimant permanent (9) est relié rigidement à la fermeture (8) via un support, de sorte que le mouvement de la fermeture (8) le long de la trajectoire de réglage provoque un mouvement de l'aimant permanent (9), dans laquelle l'aimant permanent est disposé dans la cavité de telle sorte que l'aimant permanent (9) présente une distance par rapport au boîtier (2) de moins de 10 mm dans chaque position possible de la fermeture (8) lorsque la vanne à tiroir (1) est en fonctionnement et dans laquelle un capteur est disposé à l'extérieur de la cavité (3) avec lequel une position de l'aimant permanent (9) peut être détectée, dans laquelle l'aimant permanent (9) est positionné dans la cavité (3) à l'extrémité dans un évidement latéral (15) de telle sorte qu'il soit disposé en dehors d'une connexion directe entre l'entrée (4) et la sortie (5, 6) lorsque la vanne à tiroir (1) est ouverte et dans laquelle une distance entre l'aimant permanent (9) et le capteur dans toutes les positions possibles de la fermeture (8) lorsque la vanne à tiroir (1) est en fonctionnement est inférieure à 10 mm.

2. Vanne à tiroir (1) selon la revendication 1, **caractérisée en ce qu'**un électro-aimant est prévu, avec lequel la fermeture (8) peut être déplacée le long de la trajectoire de réglage.

3. Vanne à tiroir (1) selon la revendication 1 ou 2, **caractérisée en ce que** la vanne coulissante (1) possède une entrée (4), une première sortie (5) et une deuxième sortie (6), dans laquelle par un mouvement de la fermeture (8) le long du trajet de réglage, une connexion fluidique de l'entrée (4) à la première sortie (5) et/ou une connexion fluidique de l'entrée (4) à la deuxième sortie (6) peut être établie et interrompue.

4. Vanne à tiroir (1) selon la revendication 3, **caractérisée en ce que** la fermeture (8) dans la première position ferme une ou plusieurs des ouvertures de vanne (7) débouchant dans la cavité (3) dans la deuxième sortie (6) et libère une ou plusieurs ouvertures de vanne (7) débouchant de la cavité (3) dans la première sortie (5).

5. Vanne à tiroir (1) selon la revendication 1 ou 4, **caractérisée en ce que** l'aimant permanent (9) est disposé dans le boîtier (2), de sorte que l'aimant permanent (9) soit immergé dans le fluide lorsqu'un fluide s'écoule de l'entrée (4) à travers la cavité (3) vers la sortie (5, 6) lorsque la vanne à tiroir (1) est ouverte.

6. Vanne à tiroir (1) selon une des revendications 1 à 5, **caractérisée en ce que** le capteur est disposé à l'extérieur du boîtier (2), de sorte que le capteur ne soit pas immergé dans le fluide lorsqu'un fluide s'écoule de l'entrée (4) à travers la cavité (3) vers la sortie (5, 6) lorsque la vanne à tiroir (1) est ouverte.

7. Vanne à tiroir (1) selon une des revendications 1 à 6, **caractérisée en ce que** le boîtier (2) est constitué d'un matériau non magnétisable, notamment un plastique ou un métal, de préférence de l'aluminium.

8. Vanne à tiroir (1) selon une des revendications 1 à 7, **caractérisée en ce que** l'aimant permanent (9) est disposé dans la cavité (3) de telle manière que l'aimant permanent (9) dans toutes les positions possibles de la fermeture (8) pendant le fonctionnement du vanne à tiroir (1) soit à une distance du boîtier (2) inférieure à 5 mm.

9. Vanne à tiroir (1) selon une des revendications 1 à 8, **caractérisée en ce que** le capteur se trouve à l'extérieur du boîtier (2) dans une position correspondante à une position de l'aimant permanent (9) .

10. Vanne à vanne à tiroir (1) selon une des revendications 1 à 9, **caractérisée en ce qu'**une distance entre l'aimant permanent (9) et le capteur dans chaque position possible de la fermeture (8) lors du fonctionnement de la vanne à tiroir (1) est inférieure à 5 mm.

11. Vanne à vanne à tiroir (1) selon une des revendications 1 à 10, **caractérisée en ce que** le capteur présente un capteur Hall ou est formé par un capteur Hall.

12. Vanne à tiroir (1) selon une des revendications 1 à 11, **caractérisée en ce qu'**un signal de sortie électrique d'un module de capteur (10), qui contient le capteur, correspond à une première tension prédéfinie lorsque la vanne à tiroir (1) est fermée.

13. Vanne à tiroir (1) selon une des revendications 1 à 12, **caractérisée en ce qu'**un signal de sortie électrique d'un module de capteur (10), qui contient le capteur, correspond à une deuxième tension prédéfinie lorsque la vanne à tiroir (1) est ouverte.
